**Europäisches Patentamt**

(19) **European Patent Office**

**Office européen des brevets**

(11) Veröffentlichungsnummer: **0 075 891**
**B1**

(12) # EUROPÄISCHE PATENTSCHRIFT

(45) Veröffentlichungstag der Patentschrift:
**11.05.88**

(21) Anmeldenummer: **82108852.3**

(22) Anmeldetag: **24.09.82**

(51) Int. Cl.⁴: **G 06 F 9/30**

(54) **Steuerschaltung zur Verarbeitung von Speicheroperanden.**

(30) Priorität: **30.09.81 DE 3138948**

(43) Veröffentlichungstag der Anmeldung:
**06.04.83 Patentblatt 83/14**

(45) Bekanntmachung des Hinweises auf die Patenterteilung:
**11.05.88 Patentblatt 88/19**

(84) Benannte Vertragsstaaten:
**AT BE CH FR GB IT LI NL SE**

(56) Entgegenhaltungen:
**GB - A - 2 016 752**
**US - A - 3 370 274**

(73) Patentinhaber: **Siemens Aktiengesellschaft Berlin und München, Wittelsbacherplatz 2, D-8000 München 2 (DE)**

(72) Erfinder: **Tielcke, Rolf, Dipl.-Ing., Becker-Gundahl-Strasse 14c, D-8000 München 71 (DE)**
Erfinder: **Cringle, Frank, Mauthäuslstrasse 3, D-8000 München 70 (DE)**

## Beschreibung

Die Erfindung betrifft eine Steuerschaltung zur Verarbeitung von Speicheroperanden gemäss den Merkmalen des Oberbegriffs des Patentanspruchs 1.

Datenverarbeitungsanlagen der oberen Leistungsklasse arbeiten vielfach in sogenannter Fliessbandtechnik, wobei die Befehlsverarbeitung mit Hilfe zweier Prozessoren in mehreren parallel arbeitenden Stufen durchgeführt wird. Diese Aufgabenverteilung geht so vor sich, dass ein Befehlsaufbereitungsprozessor im Vorgriff und parallel zur eigentlichen Befehlsausführung das Befehlslesen, die Befehlsinterpretation, die Operandenadressrechnung und das Lesen von Speicheroperanden durchführt, während ein Befehlsausführungsprozessor die eigentliche Befehlsausführung und die Abspeicherung der Ergebnisse im Registersatz oder im Puffer- bzw. Hauptspeicher übernimmt. Auf diese Weise können mehrere Befehle zeitlich überlappt abgearbeitet werden. Voraussetzung für den dadurch erzielbaren hohen Befehlsdurchsatz ist eine entsprechende Aufbereitung der Speicheroperanden, z.B. die links- oder rechtsbündige Ausrichtung an der Doppelwortgrenze sowie die byteweise Markierung von Lese- und Schreiboperanden. Eine derartige Markierung hat z.B. beim Lesen den Vorteil, dass nur relevante Bytes an die z.B. doppelwortbreite Schnittstelle übertragen und in nichtrelevante Bytes Nullen eingesetzt werden, so dass unabhängig von der Lage des Operanden im Doppelwort in jedem Fall eine einheitliche Doppelwortverarbeitung gewährleistet ist. Bei Schreibzugriffen ist eine Markierung insofern vorteilhaft, weil dadurch ein Operand, der über eine doppelwortbreite Schnittstelle übertragen wird und der nicht an der Doppelwortgrenze beginnt und/oder endet, anhand der Markierungen über eine einzige Schreiboperation in den Speicher eingetragen werden kann.

Der vorliegenden Erfindung liegt nun die Aufgabe zugrunde, eine Steuerschaltung der eingangs genannten Art derart universell auszubilden, dass je nach Bedarf sowohl Lese-Bytemarker als auch Schreib-Bytemarker generiert werden können.

Diese Aufgabe wird erfindungsgemäss durch die im Kennzeichen des Patentanspruchs 1 genannten Merkmale gelöst.

Vorteilhafte Weiterbildungen der Erfindung sind in den Unteransprüchen angegeben. Im folgenden wird ein Ausführungsbeispiel der Erfindung anhand der Zeichnung näher erläutert. Dabei zeigen:

Fig. 1 ein Blockschaltbild zur Generierung von Lese- und Schreib-Bytemarkern

Fig. 2 ein Blockschaltbild zur Prüfung auf Restschreiblänge

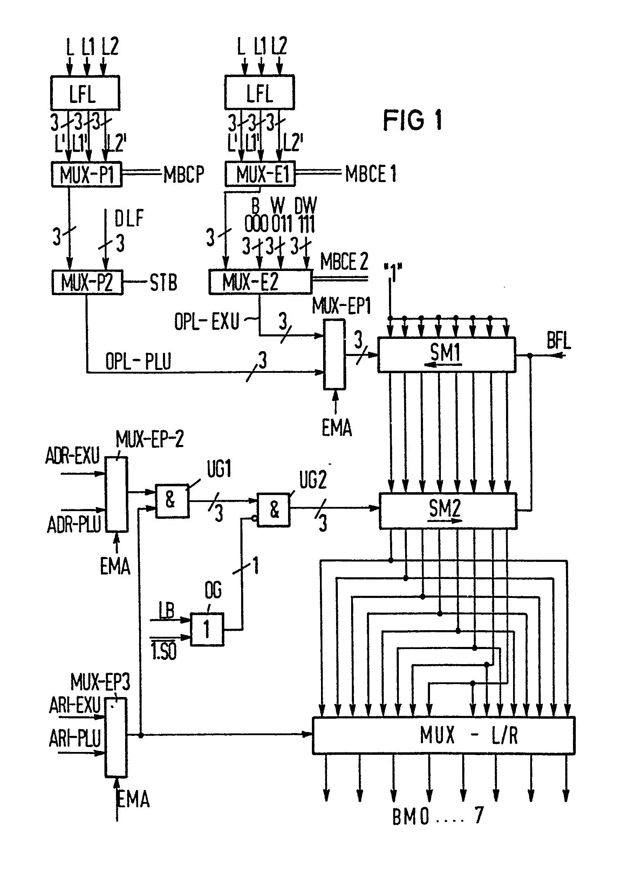

Die in Fig. 1 dargestellte Steuerschaltung ist Bestandteil der Zentraleinheit einer Datenverarbeitungsanlage und unterstützt diese bei Lese- und Schreibzugriffen zum Puffer- oder Arbeitsspeicher. Bei einer Datenverarbeitungsanlage mit überlappender Befehlsverarbeitung in Fliessbandtechnik ist die Zentraleinheit in zwei autonome Prozessoren aufgeteilt, wobei ein Befehlsaufbereitungsprozessor im Vorgriff und parallel zur eigentlichen Befehlsausführung das Befehlslesen, die Befehlsinterpretation, die Operandenadressrechnung und das Lesen von Steueroperanden übernimmt, während der eigentliche Befehlsausführungsprozessor die aufbereiteten Befehle ausführt und die Ergebnisse in einem Registersatz oder im Haupt- bzw. Pufferspeicher abspeichert. Der Datenverkehr zwischen Prozessor und Pufferspeicher bzw. zwischen Pufferspeicher und Arbeitsspeicher erfolgt über jeweils doppelwortbreite Datenwege. Die beiden Prozessoren sind jeweils durch eigene Mikroprogramme getrennt steuerbar. Bei Lesezugriffen des Befehlsausführungsprozessors bzw. des Befehlsaufbereitungsprozessors wird nun die in Fig. 1 dargestellte Steuerschaltung aktiviert, wobei als Steuerparameter die Ausrichtung des jeweiligen Operanden und dessen Länge verwendet werden. Im Befehlsausführungsprozessor wird die Länge je nach Befehlstyp auf zwei verschiedene Arten ermittelt. Handelt es sich um einen Speicher-Speicherbefehl – abgekürzt SS-Befehl, dann wird die Länge aus dem in einem Längenfeldregister zwischengespeicherten Längenfeld entnommen, wobei entweder das Längenfeld L mit den Bits 0–7 oder die beiden Teillängenfelder L1, L2 mit den Bits 0 bis 3 und 4 bis 7 in Betracht kommen. Da mit den vier bzw. acht Bits des Längenfeldes mehr als 8 Bytes gekennzeichnet werden können, andererseits aber nur eine acht Byte breite Schnittstelle vorhanden ist, werden diese Längenfelder L, L1, L2 zunächst in einen 3-Bit-Code umgewandelt. Dies geschieht in einer Längenfeldlogik LFL, die in der Weise funktioniert, dass die drei niederwertigen Bits, sofern die höherwertigen Bits alle auf Null stehen, identisch übernommen werden, und sofern in den höherwertigen Bits wenigstens eine «1» steht, alle drei niederwertigen Bits auf «1» gestellt werden. Entsprechend dem jeweiligen Befehlstyp wird einer der codierten Längenwerte L', L1', L2' über einen Multiplexer MUX-E1 durchgeschaltet, der durch einen im Mikrobefehl enthaltenen 2-Bit-Microcode MBCE1 entsprechend gesteuert wird. Bei anderen Befehlstypen erfolgt die Längenangabe nicht über ein Längenfeld, sondern direkt über ein Funktionscodefeld im Mikrobefehl, z.B. Lesen Byte Wort oder Doppelwort, wobei jeweils die Länge 1 Byte, 4 Bytes oder 8 Bytes generiert wird. Auch diese Länge wird in einen 3-Bit-Code (Bytes $-1$) umcodiert, wobei für die Länge 1 Byte die Kombination B = 000, für ein Wort die Kombination W = 011 und für ein Doppelwort die Kombination DW = 111 gelten. Über einen zweiten Multiplexer MUX-E2 werden dann entweder das Ausgangssignal des ersten Multiplexers MUX-E1 oder eine der beiden drei 3-Bitgruppen B, W oder DW als Längenwert OPL-EXU durchgeschaltet. Die Steuerung des zweiten Multiplexers MUX-E2 erfolgt wiederum durch einen 2-Bit-Mikrocode MBC-E2 im jeweiligen Mikrobefehl.

Bei Lesebefehlen des Befehlsaufbereitungsprozessors wird die Operandenlänge ebenfalls einem 3-Bit-Feld entnommen, und zwar entweder wie beim Befehlsausführungsprozessor als codierte Länge L', L1', L2' oder aus einem Direkt-Längenfeld DLF, in welchem die direkte Länge in Bytes −1 als 3-Bit-Code enthalten ist. Die Durchschaltung der jeweiligen Operandenlänge erfolgt ebenfalls über Multiplexer MUX-P1, MUX-P2, die jeweils über einen im Mikrobefehl enthaltenen 2-Bit-Mikrocode MBCP bzw. über ein Steuerbit STB gesteuert werden. Am Ausgang des zweiten Multiplexers MUX-P2 erscheint dann der dem jeweiligen Befehlstyp entsprechende Längenwert OPL-PLU.

Dieser jeweils aus Lesebefehlen des Befehlsaufbereitungsprozessors bzw. Befehlsausführungsprozessors abgeleitete Längenwert OPL-PLU bzw. OPL-EXU wird über einen durch ein Zugriffssignal EMA des Befehlsausführungsprozessors EXU gesteuerten Multiplexer MUX-EP1 an den Steuereingang einer ersten Schiebematrix SM1 durchgeschaltet. Diese achtstellige, an allen Eingängen auf «1» gesetzte Schiebematrix wird nun entsprechend dem am Steuereingang auftretenden Längenwert nach links verschoben, wobei in freiwerdende Bitstellen Nullen nachgezogen werden. Die Shiftamplitude entspricht dabei dem invertierten Längenwert, so dass sich z.B. bei einem Längenwert OPL-EXU = 111 (entsprechend acht Byte) die Shiftamplitude 0 ergibt mit der Folge, dass an allen acht Ausgängen der Schiebematrix SM1 eine «1» erscheint. Ist dagegen der Längenwert 011, dann ergibt sich aufgrund der Invertierung eine Shiftamplitude von vier Bit, so dass am Ausgang der Schiebematrix SM1 die Bitkombination 11110000 auftritt. Die Ausgänge der ersten Schiebematrix SM1 werden über eine zweite Schiebematrix SM2, deren Amplitude bei Lesezugriffen auf 0 gesetzt wird, geradeaus durchgeschaltet. Deren Ausgangssignale werden schliesslich einmal direkt und einmal in umgekehrter Reihenfolge an entsprechende Eingänge eines Zweiwege-Multiplexers MUX-L/R geschaltete, wobei die direkte bzw. vertauschte Durchschaltung durch ein befehlstypabhängiges Ausrichtsignal ARI-EXU bzw. ARI-PLU entsprechend gesteuert wird. Bei dezimalen SS-Befehlen erfolgt die Ausrichtung rechtsbündig, so dass hier die Bytemarker BM 0...7 in umgekehrter Reihenfolge ausgegeben werden, während bei allen übrigen Befehlen mit Linksausrichtung eine direkte Durchschaltung der Bytemarker erfolgt. Die Lesebytemarker werden somit in Abhängigkeit von Operandenlänge und der Operandenausrichtung wie folgt gebildet.

### a) bei linksausgerichteten Operanden

| Länge Operand | Bytes im Speicher-Ausgangsregister | | | | | | | |
|---|---|---|---|---|---|---|---|---|
| | 0 | 1 | 2 | 3 | 4 | 5 | 6 | 7 |
| 1 | X | 0 | 0 | 0 | 0 | 0 | 0 | 0 |
| 2 | X | X | 0 | 0 | 0 | 0 | 0 | 0 |
| 3 | X | X | X | 0 | 0 | 0 | 0 | 0 |
| 4 | X | X | X | X | 0 | 0 | 0 | 0 |
| 5 | X | X | X | X | X | 0 | 0 | 0 |
| 6 | X | X | X | X | X | X | 0 | 0 |
| 7 | X | X | X | X | X | X | X | 0 |
| 8 | X | X | X | X | X | X | X | X |

### b) bei rechtsausgerichteten Operanden

| Länge Operand | Bytes im Speicher-Ausgangsregister | | | | | | | |
|---|---|---|---|---|---|---|---|---|
| | 0 | 1 | 2 | 3 | 4 | 5 | 6 | 7 |
| 1 | 0 | 0 | 0 | 0 | 0 | 0 | 0 | X |
| 2 | 0 | 0 | 0 | 0 | 0 | 0 | X | X |
| 3 | 0 | 0 | 0 | 0 | 0 | X | X | X |
| 4 | 0 | 0 | 0 | 0 | X | X | X | X |
| 5 | 0 | 0 | 0 | X | X | X | X | X |
| 6 | 0 | 0 | X | X | X | X | X | X |
| 7 | 0 | X | X | X | X | X | X | X |
| 8 | X | X | X | X | X | X | X | X |

X bedeutet: relevantes Byte
0 bedeutet: Null einsetzen
Bei Längen > 8 Byte sind immer alle Bytes mit X zu besetzen

Falls der Operand nicht an der Doppelwortgrenze steht und die Operandenlänge nicht über einen einzigen Zugriff beschafft werden kann – z.B. wenn bei einer 16 Byte breiten Pufferspeicher-Zeile die Operandenadresse auf Byte 14 zeigt, das Operandenfeld an aufsteigenden Adressen liegt und die Operandenlänge grösser 2 Byte beträgt – dann wird automatisch ein zweiter Lesezugriff eingeleitet und der Operand zur maximal möglichen Länge von einem Doppelwort ergänzt. Während dieses Speicherzugriffs wird die Zentraleinheit angehalten. Die Zusammensetzung aus bereits gelesenen Bytes und neu hinzukommenden Bytes erfolgt im Pufferspeicher-Ausgangsregister. In jedem Fall orientieren sich die Lesebytemarker ausschliesslich an der Länge unabhängig von der Lage der Operanden im Speicher.

Beim Befehlslesen selbst werden sowohl die Schiebematrix SM1 als auch die Schiebematrix SM2 auf Ringshift gesetzt. Dabei spielt die Operandenlänge überhaupt keine Rolle, da in jedem Fall alle acht Bytes übertragen werden sollen. Da alle Eingänge «1» gesetzt sind, treten bei Ringshift unabhängig von der Operandenlänge an den Ausgängen ebenfalls nur Einsen auf.

Die Schaltung gemäss Fig. 1 wird in etwas erweiterter Form auch für die Generierung von Schreib-Bytemarkern verwendet. Beim Schreiben eines Operanden in den Puffer- bzw. Arbeitsspeicher wird bei einer acht Byte breiten Schnittstelle zwischen Prozessor und Speicher über acht Bytemarker dem Speicher mitgeteilt, welche Bytes innerhalb des Doppelwortes geändert werden sollen. Die Parameter bei der Erzeugung der Schreib-Bytemarker sind:
- Byteadresse des Operanden
- Länge des Operanden
- Ausrichtung des Operanden
- Steuergrösse erstes Schreiben

Im Befehlsausführungsprozessor werden Ausrichtung und Operandenlänge wie beim Mikrobefehl «Lesen Doppelwort SS» ausgewertet. Im Befehlsaufbereitungsprozessor wird wie bei Lesen die Ausrichtung und Operandenlänge (nur direkte Längenangabe) dem Mikrobefehlswort entnommen. Anders als beim Lesen kommt nun auch die zweite Schiebematrix SM2 zum Einsatz, die durch die jeweilige Byteadresse ADR-EXU bzw. ADR-PLU sowie durch das jeweilige Ausricht-Steuersignal ARI-EXU bzw. ARI-PLU gesteuert wird. Die Durchschaltung der jeweils zuständigen Adresse bzw. des jeweils zugehörigen Ausrichtsignals erfolgt über Multiplexer MUX-EP2 bzw. MUX-EP3, deren Ausgangssignale über ein UND-Glied UG1 miteinander verknüpft werden. Entsprechend diesem Verknüpungssignal werden die Bits der zweiten Schiebematrix SM2 nach rechts verschoben, wobei das Operandenfeld, gesehen von der jeweiligen Schreib-Anfangsadresse, sowohl an aufsteigenden Adressen (SS-Typ logisch) als auch absteigenden Adressen (SS-Typ dezimal) liegen kann. Bezogen auf die Shiftamplitude bedeutet das, dass für links ausgerichtete Operanden die direkte Adresse und für rechts ausgerichtete Operanden das Komplement der Adresse verwendet wird.

Am Ausgang des Multiplexer MUX-LR ergeben sich somit folgende Schreibbytemarker als Funktion der Parameter Byteadresse, Operandenlänge und Operandenausrichtung.

| Operanden-Länge (in Bytes + 1) | Byte-Adresse | Bytenmarker für linksausgerichtete Operanden (log.SS) Byte | | | | | | | | Bytenmarker für rechtsausgerichtete Operanden (dec.SS) Byte | | | | | | | |
|---|---|---|---|---|---|---|---|---|---|---|---|---|---|---|---|---|---|
| | | 0 | 1 | 2 | 3 | 4 | 5 | 6 | 7 | 0 | 1 | 2 | 3 | 4 | 5 | 6 | 7 |
| 0 | 0 | 1 | | | | | | | | 1 | | | | | | | |
| | 1 | | 1 | | | | | | | | 1 | | | | | | |
| | 2 | | | 1 | | | | | | | | 1 | | | | | |
| | 3 | | | | 1 | | | | | | | | 1 | | | | |
| | 4 | | | | | 1 | | | | | | | | 1 | | | |
| | 5 | | | | | | 1 | | | | | | | | 1 | | |
| | 6 | | | | | | | 1 | | | | | | | | 1 | |
| | 7 | | | | | | | | 1 | | | | | | | | 1 |
| 1 | 0 | 1 | 1 | | | | | | | 1 | | | | | | | |
| | 1 | | 1 | 1 | | | | | | 1 | 1 | | | | | | |
| | 2 | | | 1 | 1 | | | | | | 1 | 1 | | | | | |
| | 3 | | | | 1 | 1 | | | | | | 1 | 1 | | | | |
| | 4 | | | | | 1 | 1 | | | | | | 1 | 1 | | | |
| | 5 | | | | | | 1 | 1 | | | | | | 1 | 1 | | |
| | 6 | | | | | | | 1 | 1 | | | | | | 1 | 1 | |
| | 7 | | | | | | | | 1 | | | | | | | 1 | 1 |
| 2 | 0 | 1 | 1 | 1 | | | | | | 1 | | | | | | | |
| | 1 | | 1 | 1 | 1 | | | | | 1 | 1 | | | | | | |
| | 2 | | | 1 | 1 | 1 | | | | 1 | 1 | 1 | | | | | |
| | 3 | | | | 1 | 1 | 1 | | | | 1 | 1 | 1 | | | | |
| | 4 | | | | | 1 | 1 | 1 | | | | 1 | 1 | 1 | | | |
| | 5 | | | | | | 1 | 1 | 1 | | | | 1 | 1 | 1 | | |
| | 6 | | | | | | | 1 | 1 | | | | | 1 | 1 | 1 | |
| | 7 | | | | | | | | 1 | | | | | | 1 | 1 | 1 |
| ≥ 7 | 0 | 1 | 1 | 1 | 1 | 1 | 1 | 1 | 1 | 1 | | | | | | | |
| | 1 | | 1 | 1 | 1 | 1 | 1 | 1 | 1 | 1 | 1 | | | | | | |
| | 2 | | | 1 | 1 | 1 | 1 | 1 | 1 | 1 | 1 | 1 | | | | | |
| | 3 | | | | 1 | 1 | 1 | 1 | 1 | 1 | 1 | 1 | 1 | | | | |
| | 4 | | | | | 1 | 1 | 1 | 1 | 1 | 1 | 1 | 1 | 1 | | | |
| | 5 | | | | | | 1 | 1 | 1 | 1 | 1 | 1 | 1 | 1 | 1 | | |
| | 6 | | | | | | | 1 | 1 | 1 | 1 | 1 | 1 | 1 | 1 | 1 | |
| | 7 | | | | | | | | 1 | 1 | 1 | 1 | 1 | 1 | 1 | 1 | 1 |

Die bisher beschriebene Betriebsweise gilt jeweils nur für das erste Schreiben. Nur hier muss die Byte-Adresse berücksichtigt werden, wobei dann ausgehend von dieser Anfangsadresse jeweils alle folgenden Bytes bis zur Doppelwortgrenze geschrieben werden. Falls der Operand nicht über einen einzigen Schreibvorgang im Speicher eingetragen werden kann, dann beginnen anschliessende Schreibvorgänge an Byte 0 (bei logischen Operanden) bzw. an Byte 7 (bei dezimalen Operanden). Zur Steuerung dieses Ablaufs ist im Befehlsausführungsprozessor ein Merker-Flipflop vorgesehen, das vor dem ersten Schreiben gesetzt und vor dem zweiten Schreiben wieder zurückgesetzt wird. In diesem Fall muss dann die Schiebematrix SM2 automatisch auf die Shiftamplitude 0 gesetzt werden. Hierzu ist im Signalweg zwischen erstem UND-Glied UG1 und dem Steuereingang der Schiebematrix SM2 ein zweites UND-Glied UG2 vorgesehen, dessen zweiter Eingang über ein ODER-Glied OG in der Weise ansteuerbar ist, dass bei nicht erstem Schreiben $\overline{T.SO}$ sowie bei einem Lesebefehl LB der Signalweg gesperrt wird.

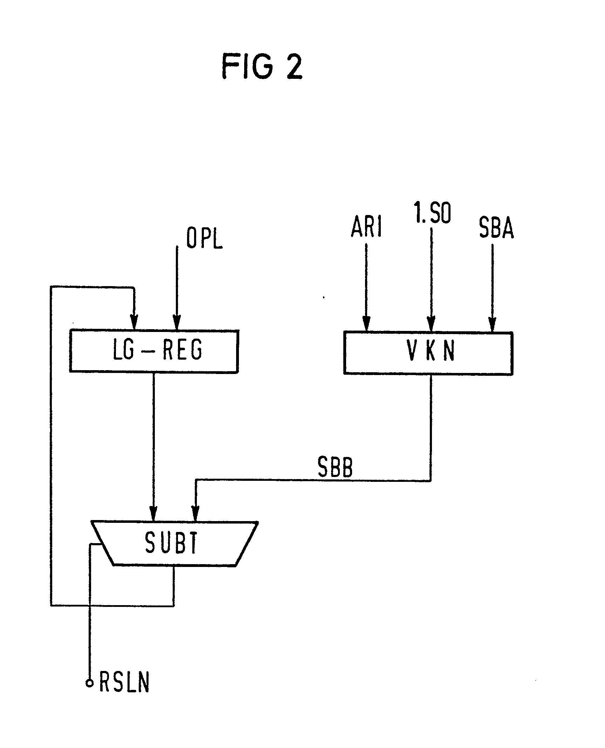

Bei der Mikroprogrammierung von SS-Befehlen ist es ausserdem erforderlich, dass der Anteil der noch zu schreibenden Bytes ermittelt wird. Diese Grösse wird in einer Subtrahierstufe SUBT – wie in Fig. 2 schematisch angedeutet – durch Differenzbildung von Operandenlänge OPL minus Anzahl der bei einem Schreibzugriff schreibbaren Bytes SBB gewonnen. Die Operandenlänge wird bei Beginn des Maschinenbefehls in ein Längenregister LG-REG eingetragen. Die Anzahl der bei einem Schreibzugriff schreibbaren Bytes SBB ist identisch mit der Summe der Bytemarker, die beim Schreiben gesetzt werden und die in einem Verknüpfungsnetzwerk VKN aus den Parametern: Operandenausrichtung, Steuergrösse erstes Schreiben und Schreibbyteadresse, gewonnen werden. Bei jedem Schreibvorgang wird die jeweils verbleibende Operandenrestlänge im Längenregister LG-REG aktualisiert.

Die Parameter Operandenlänge OPL und Anzahl der schreibbaren Bytes SBB sind vor einem Speicherzugriff bereits bekannt. Der Test auf die Restschreiblänge kann daher bereits vor Ausführung eines Schreibzugriffs erfolgen. Der Test: Restschreiblänge negativ RLSN sagt folgendes aus: Ist der Test erfüllt, dann wird der Operand mit dem nächsten Schreibvorgang vollständig in den Speicher eingetragen. Ist der Test dagegen nicht erfüllt, dann ist der Operand mit dem nächsten Schreibvorgang noch nicht vollständig im Speicher eingetragen. Diese Testabfrage erlaubt es, Programmabläufe in Schleifen abzuwickeln und die Programmdurchläufe kurz zu halten.

**Patentansprüche**

1. Steuerschaltung zur Verarbeitung von Speicheroperanden in einer nach dem Fliessbandprinzip arbeitenden Datenverarbeitungsanlage mit einem Befehlsaufbereitungsprozessor, einem Befehlsausführungsprozessor und einem gemeinsamen, aus Pufferspeicher und Arbeitsspeicher bestehenden Speichersystem, wobei die durch Mikroprogramme gesteuerten Prozessoren jeweils doppelwortbreite Rechenwerke aufweisen und der Datenverkehr zwischen Prozessor und Pufferspeicher bzw. Pufferspeicher und Arbeitsspeicher über jeweils doppelwortbreite Datenwege erfolgt, sowie unter Verwendung eines Markiernetzwerkes, mit dem in Abhängigkeit von in Lese- bzw. Schreib-Mikrobefehlen enthaltenen Steuerinformationen einzelne Bytes des jeweiligen Speicheroperanden markierbar sind, dadurch gekennzeichnet, dass eine erste achtstellige Schiebematrix (SM1) vorgesehen ist, die eingangsseitig jeweils mit «1» besetzbar ist und die in Abhängigkeit von einem im jeweiligen Mikrobefehl des Befehlsausführungsprozessors (EXU) bzw. des Befehlsaufbereitungsprozessors (PLU) direkt bzw. codiert enthaltenen Längenwert (OPL-EXU, OPL-PLU) eine Linksverschiebung mit entsprechender Byte-Amplitude ausführt, wobei in jeweils freiwerdende Stellen entsprechend viele Nullen nachgeschoben werden, dass jeder Ausgang der ersten Schiebematrix (SM1) mit je einem Eingang einer zweiten, ebenfalls achtstelligen Schiebematrix (SM2) verbunden ist, die in Abhängigkeit von der je nach Befehlstyp bzw. dessen Operandenausrichtung direkten Adresse (ADR-EXU, ADR-PLU) bzw. deren Komplement eine entsprechende Rechtsverschiebung ausführt und dass die Ausgänge der zweiten Schiebematrix (SM2) direkt an erste Eingänge und in umgekehrter Reihenfolge an zweite Eingänge eines Zweiwege-Multiplexers (MUX-L/R) geschaltet werden, der durch ein im Mikrobefehl enthaltenes befehlstypabhängiges Ausricht-Steuersignal (ARI-EXU, ARI-PLU) einstellbar ist und an dessen Ausgängen für jedes zu lesende bzw. zu schreibende Byte des Operanden ein Byte-Kennzeichenbit (BM 0 . . . 7) erscheint.

2. Steuerschaltung nach Anspruch 1, dadurch gekennzeichnet, dass im Befehlsausführungsprozessor (EXU) der Längenwert (OPL-EXU) in Abhängigkeit vom jeweiligen Befehlstyp in der Weise gebildet wird, dass aus einem Längenfeld (L, L1, L2) des entsprechenden Befehls ableitbare 3-Bit-Gruppen an je einen Eingang eines ersten Multiplexers (MUX-E1) geschaltet sind, dass der Ausgang dieses ersten Multiplexers (MUX-E1) zusammen mit weiteren, je nach Befehlstyp aus der Byte-Wort- bzw. Doppelwort-Adresse abgeleiteten 3-Bit-Gruppen an je einen Eingang eines zweiten Multiplexers (MUX-E2) geschaltet sind und dass die beiden Multiplexer durch im Mikrobefehl enthaltene Mikrocodesignale (MBCE1, 2) derart steuerbar sind, dass die dem jeweiligen Befehlstyp zugeordnete 3-Bit-Gruppe als ein die erste Schiebematrix steuernder Längenwert (OPL-EXU) durchgeschaltet wird.

3. Steuerschaltung nach Anspruch 1 oder 2, dadurch gekennzeichnet, dass im Befehlsaufbereitungsprozessor (PLU) der Längenwert (OPL-PLU) in Abhängigkeit vom jeweiligen Befehlstyp in der Weise gebildet wird, dass aus einem Längenfeld (L, L1, L2) des entsprechenden Befehls ableitbare 3-Bit-Gruppen an je einen Eingang eines ersten Multiplexers (MUX-P1) geschaltet sind, dass der Ausgang dieses ersten Multiplexers (MUX-P1) und je ein in einem Literalfeld (LIT B) bereitgestellte 3-Bit-Gruppe an je einen Eingang eines zweiten Multiplexers (MUX-P2) geschaltet sind und dass die beiden Multiplexer durch ein im jeweiligen Mikrobefehl enthaltenes Mikrocodesignal (MBCP) bzw. durch ein Steuerbit (STB) derart steuerbar sind, dass die dem jeweiligen Befehlstyp zugeordnete 3-Bit-Gruppe als ein die erste Schiebematrix steuernder Längenwert (OPL-PLU) durchgeschaltet wird.

4. Steuerschaltung nach einem der vorhergehenden Ansprüche, dadurch gekennzeichnet, dass die im Mikrobefehl des Befehlsausführungsprozessors (EXU) bzw. Befehlsaufbereitungsprozessor (PLU) enthaltene Adresse (ADR-EXU, ADR-PLU) bzw. deren Komplement und das ebenfalls im Mikrobefehl enthaltene Ausricht-Steuersignal (ARI-EXU, ARI-PLU) für die befehlstypabhängige Operandenlinks- oder Rechtsausrichtung durch ein UND-Glied (UG1) miteinander verknüpft sind, dessen Ausgangssignal als Shiftamplitude für die zweite Schiebematrix (SM2) dient.

5. Steuerschaltung nach Anspruch 4, dadurch gekennzeichnet, dass im Signalweg zwischen UND-Glied (UG1) und zweiter Schiebematrix (SM2) ein weiteres UND-Glied (UG2) eingeschaltet ist, dessen zweiter Eingang über ein ODER-Glied (OG) in der Weise ansteuerbar ist, dass bei einem Lesebefehl bzw. bei jedem, nicht ersten, Schreibbefehl der Signalweg unterbrochen und dadurch die Shiftamplitude der zweiten Schiebematrix (SM2) auf Null gesetzt wird.

**Claims**

1. A control circuit for the processing of store operands in a data processing system which operates in accordance with the conveyor line principle comprising a command preparation processor, a command execution processor, and a common storage system which comprises a buffer store and a main store, where the processors, which are controlled by micro-programmes, each include calculating units which have the breadth of a double-word, and where the data traffic between processor and buffer store and between buffer store and main store takes place via data channels have the breadth of a double word, and using a marker network by means of which, in dependence upon items of control information contained in read- and write-micro-commands, individual bits of the respective store operand can be marked, characterised in that a first eight-position shift matrix (SM1) is provided and which, in dependence upon a length value (OPL-EXU, OPL-PLU), contained directly or in coded form in the respective micro-command of the command execution processor (EXU) or of the command preparation processor (PLU), carries out a left-hand shift with corresponding byte amplitude, where a corresponding number of zeros are shifted into positions which become free, that each output of the shift matrix (SM1) is connected to an input of a second, likewise eight-position shift matrix (SM2) which, in dependence upon the direct address (ADR-EXU, ADR-PLU) or the complement thereof, in accordance with the command type and its operand alignment, carries out a corresponding shift to the right, and that the outputs of the second shift matrix (SM2) are directly connected to first inputs and, in reverse sequence, to second inputs of a two-way multiplexer (MUX-L/R) which can be set by a command-type-dependent align control signal (ARI-EXU, ARI-PLU), contained in the micro-command, and at whose outputs a byte characteristic bit (BM 0 . . . 7) appears for each operand byte which is to be read or to be input.

2. A control circuit as claimed in claim 1, characterised in that in the command execution processor (EXU) the length value (OPL-EXU) is formed in dependence upon the respective command type in that 3-bit groups, which can be derived from a length field (L, L1, L2) of the corresponding command, are each switched to an input of a first multiplexer (MUX-E1), that the output of this first multiplexer (MUX-E1), together with further 3-bit groups derived, in accordance with the command type, from the byte-word- or double-word-address, are in each case switched to an input of a second multiplexer (MUX-E2), and that the two multiplexers can be controlled by micro-code signals (MBCE1, 2), contained in the micro-command, in such manner that the 3-bit group, which is assigned to the respective command type, is switched-through as a length value (OPL-EXU) which controls the first shift matrix.

3. A control circuit as claimed in claim 1 or claim 2, characterised in that in the command preparation processor (PLU) the length value (OPL-PLU) is formed in dependence upon the respective command type in that 3-bit groups, which can be derived from a length field (L, L1, L2) of the corresponding command, are in each case switched to an input of a first multiplexer (MUX-P1), that the output of this first multiplexer (MUX-P1), and in each case a 3-bit group made available in a literal field (LIT B), are in each case switched to an input of a second multiplexer (MUX-P2), and that the two multiplexers can be controlled by a micro-code signal (MBCP), contained in the respective micro-command, or by a control bit (STB) in such manner that the 3-bit group assigned to the respective command type is switched through as a length value (OPL-PLU) which controls the first shift matrix.

4. A control circuit as claimed in one of the preceding claims, characterised in that the address (ADR-EXU, ADR-PLU) or the complement thereof, contained in the micro-command of the command execution processor (EXU) or of the command preparation processor (PLU) respectively, and the align control signal (ARI-EXU, ARI-PLU) likewise contained in the micro-command, for the command-type-dependent operand left-alignment or right-alignment are logic-linked to one another by an AND-gate (UG1) whose output signal serves as shift amplitude for the second shift matrix (SM2).

5. A control circuit as claimed in claim 4, characterised in that a further AND-gate (UG2) is connected in the signal path between the AND-gate (UG1) and the second shift matrix (SM2), where the second input of the AND-gate (UG2) can be driven via an OR-gate (OG) in such manner that in the case of a read command and in the case of each write command which is not the first, the signal path is interruped and the shift amplitude of the second shift matrix (SM2) is thereby set at zero.

**Revendications**

1. Circuit de commande pour le traitement d'opérandes de mémoire dans une installation de traitement de données, qui opère selon le principe du traitement en continu et comporte un processeur de préparation des instructions, un processeur d'exécution des instructions et un système de mémoire commun constitué par une mémoire tampon et une mémoire de travail, et dans lequel les processeurs commandés par des microprogrammes comportent respectivement des unités de calcul possédant une largeur de mot double et le trafic des données entre un processeur et la mémoire tampon et/ou entre la mémoire tampon et la mémoire de travail s'effectue par l'intermédiaire de voies de transmission de données possédant respectivement une largeur de mot double, ainsi que moyennant l'utilisation d'un réseau de marquage, à l'aide duquel des octets individuels des opérandes respectifs de mémoire peuvent être marqués en fonction d'informations de commande contenues dans des micro-instructions de lecture ou d'enregistrement, caractérisé par le fait qu'il est prévu une première matrice de transfert (SM1) à huit positions, qui peut être occupée, côté entrée, respectivement par des «1» et qui exécute un transfert vers la gauche d'une amplitude d'octets correspondante, en fonction d'une valeur de longueur (OPL-EXU, OPL-PLU) contenue directement ou à l'état codé dans la micro-instruction respective du processeur (EXU) d'exécution des instructions ou du processeur (PLU) de préparation des instructions, auquel cas un nombre correspondant de zéros est transféré à la suite dans des positions devenues respectivement libres, que chaque sortie de la première matrice de transfert (SM1) est reliée à une entrée respective d'une seconde matrice de transfert (SM2) également à huit positions, qui exécute un transfert correspondant vers la droite en fonction de l'adresse (ADR-EXU, ADR-PLU) directe, en fonction du type d'instruction ou de l'alignement de son opérande ou en fonction du complément de cette adresse, et que les sorties de la seconde matrice de transfert (SM2) sont raccordées directement à des premières entrées et, selon la succession inverse, à des secondes entrées de multiplexeurs bidirectionnels (MUX-L/R), qui est réglable au moyen d'un signal de commande d'alignement (ARI-EXU, ARI-PLU) qui est contenu dans la micro-instruction et dépend du type d'instruction, et sur les sorties desquels un bit de caractérisation d'octet (BM 0 . . . 7) apparaît pour chaque octet devant être lu ou enregistré de l'opérande.

2. Circuit de commande suivant la revendication 1, caractérisé par le fait que dans le processeur (EXU) d'exécution des instructions, la valeur de longueur (EXU) est formée en fonction du type respectif d'instruction de telle sorte que des groupes de 3 bits, qui peuvent être dérivés d'une zone de longueur (L, L1, L2) de l'instruction correspondante, sont envoyés aux entrées respectives d'un premier multiplexeur (MUX-ER), que le signal de sortie de ce premier multiplexeur (MUX-ER) est transféré, ainsi que d'autres groupes de 3 bits dérivés de l'adresse du mot d'octet ou de l'adresse de mot double en fonction du type d'instruction, aux entrées respectives d'un second multiplexeur (MUX-E2) et que les deux multiplexeurs peuvent être commandés par des signaux de microcodes (MBCE1, 2) contenus dans la microinstruction de telle sorte que le groupe de 3 bits, qui est associé au type respectif d'instruction, est transmis directement sous la forme d'une valeur de longueur (OPL-EXU) commandant la première matrice de transfert.

3. Circuit de commande suivant la revendication 1 ou 2, caractérisé par le fait que dans le processeur (PLU) de préparation des instructions, la valeur de longueur (OPL-PLU) est formée en fonction du type respectif d'instruction de telle sorte que des groupes de 3 bits pouvant être dérivés d'une zone de longueur (L, L1, L2) de l'instruction correspondante sont envoyés aux différentes entrées d'un premier multiplexeur (MUX-P1), que le signal de sortie de ce premier multiplexeur (MUX-P1) et un groupe respectif de 3 bits préparé dans une zone litérale (LIT B) est envoyé aux entrées respectives d'un second multiplexeur (MUX-P2) et que les deux multiplexeurs peuvent être commandés par un signal de micro-code (MBCP) contenu dans la micro-instruction respective et par un bit de commande (STB) de telle sorte que le groupe de 3 bits associé au type respectif d'instruction, est transféré directement sous la forme d'une valeur de longueur (OPL-PLU) commandant la première matrice de transfert.

4. Circuit de commande suivant l'une des revendications précédentes, caractérisé par le fait que l'adresse (ADR-EXU, ADR-PLU) contenue dans la micro-instruction du processeur (EXU) d'exécution des instructions ou du processeur (PLU) de préparation des instructions, ou son complément et le signal de commande d'alignement (ARI-EXU, ARI-PLU) contenu également dans la micro-instruction et utilisé pour l'alignement à droite ou à gauche de l'opérande, en fonction du type d'instruction, sont combinés entre eux par un circuit ET (UG1), dont le signal de sortie sert d'amplitude de décalage pour la seconde matrice de transfert (SM2).

5. Circuit de commande suivant la revendication 4, caractérisé par le fait que dans la voie de transmission de signaux entre le circuit ET (UG1) et la seconde matrice de transfert (SM2) se trouve branché un autre circuit ET (UG2), dont la seconde entrée peut être commandée par l'intermédiaire d'un circuit OU (EG) de telle sorte que, dans le cas d'une instruction de lecture ou bien lors de chaque instruction d'enregistrement, qui n'est pas la première, la voie de transmission de signaux est interrompue et, de ce fait, l'amplitude de décalage de la seconde matrice de transfert (SM2) est positionnée à zéro.

FIG 1

# FIG 2